# EUROPEAN PATENT APPLICATION

(11) **EP 0 712 045 A2**
(43) Date of publication of application: **15.05.1996**
(21) Application number: 95420305.5
(22) Date of filing: 03.11.1995
(51) Int. Cl.: G03D 15/00

(54) **Index print for preventing removal of an image recording medium from a container**

(30) Priority: 14.11.1994 US 338990
(71) Applicant: EASTMAN KODAK COMPANY, Rochester, New York 14650-2201 (US)
(72) Inventor: Wess, Raymond Eugene, c/o Eastman Kodak Company, Rochester, New York 14650-2201 (US); Frosig, Peter Albert, c/o Eastman Kodak Company, Rochester, New York 14650-2201 (US)
(74) Representative: Buff, Michel

(57) **Abstract**

An index print includes a support sheet on which are located a plurality of positive images corresponding to a plurality of images on an image recording medium. The support sheet is capable of preventing the image recording medium from being removed from a storage container used to store the image recording medium

## Description

### CROSS-REFERENCE TO RELATED APPLICATION

Reference is made to commonly assigned, copending application Serial No. 08/262,193, filed 6/20/94 in the names of Manico et al., which is assigned to the assignee of this application.

### FIELD OF THE INVENTION

The invention relates generally to the field of imaging, and in particular to index prints. More specifically, the invention relates to an index print for preventing removal of an image recording medium from a container used to store the image recording medium.

### BACKGROUND OF THE INVENTION

U.S. Patent No. 4,966,285 (the '285 patent) discloses an index sheet which includes one recording sheet on which are printed, as small-size positive images in parallel rows, a plurality of scenes recorded on an image recording medium such as a photographic film, video floppy video cassette or video disc. The small positive images are arranged in the same order they were taken, and frame numbers are printed in juxtaposition with the respective positive images.

To produce such an index sheet, a plurality of strips of negative film are copied onto photographic paper in a reduced size with the negative strips inserted in a negative sheath. For a magnetic or optical image recording medium for a very large number of images, a lesser plurality of scenes read out are edited in such a manner as to arrange in a representative sample and thereafter are printed on a recording sheet.

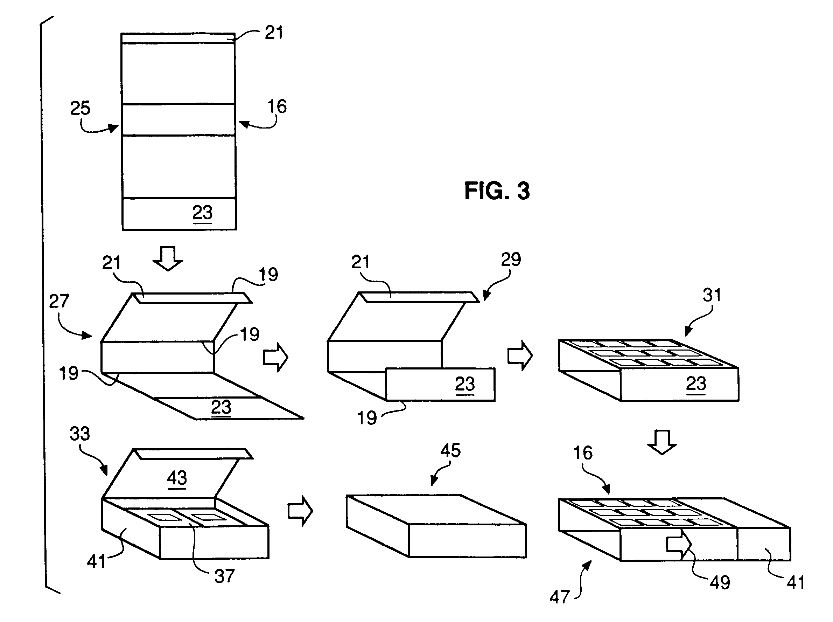

This index sheet can be part of a package comprising a container having a casing formed with at least one recess for the image recording medium and/or printed photographs, and a cover swingably mounted on the casing. A transparent pocket formed on the outer or inner side of the cover contains the index sheet. As can be seen in Figs. 3 and 11 of the '285 patent, pressure sensitive fasteners, respectively 56,57 and 109,110, are required to maintain the cover in a closed position, thereby preventing removal of the image recording medium from the container.

Having to use pressure sensitive fasteners to prevent removal of the image recording medium from the container increases the complexity and cost of manufacturing such a container.

### SUMMARY OF THE INVENTION

The present invention is directed to overcoming one or more of the problems set forth above. Briefly summarized, according to one aspect of the present invention, an index print includes a support sheet on which are located a plurality of positive images corresponding to a plurality of images on an image recording medium. The support sheet is capable of preventing the image recording medium from being removed from a storage container used to store the image recording medium.

In a particularly preferred embodiment of the invention, a first portion of the support sheet is secured to a second portion of the support sheet to form the support sheet into a loop. The positive images are located on an outer surface of the looped support sheet so as to be viewable. The looped support sheet is placeable about the container to maintain the container in a closed position, thereby securing the image recording medium within the container.

By utilizing the index print itself to prevent removal of the image recording medium from the container, the necessity of pressure sensitive fasteners or other devices to prevent removal of the image recording medium from the container is eliminated. As a result, the complexity and cost of manufacturing such a container is lowered.

These and other aspects, objects, features and advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is a schematic illustration of a system used to make an index print from photographic slides;
FIG. 2 is an index print made by the system of Fig. 1; and
FIG. 3 is a flow diagram displaying how the index print of Fig. 2 is used to secure photographic slides within a container.

### DETAILED DESCRIPTION OF THE INVENTION

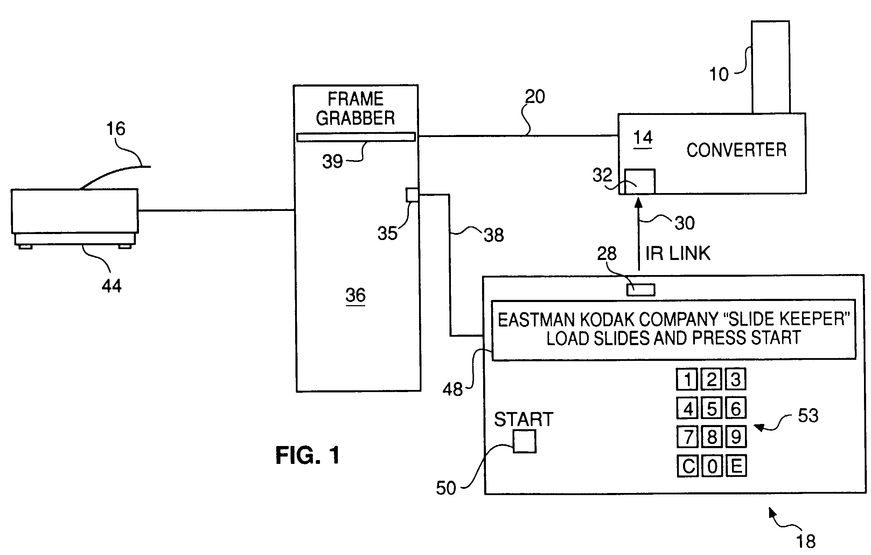

Beginning with FIG. 1, a system for creating an index print of images recorded on an image recording medium will be described. A Kodak Carousel Stack loader 10, which holds about 40 mounted photographic slides, is mounted on a Navitar VideoMate 2020 Slide to Video Converter, designated by the reference numeral 14. An alternative slide to video converter is the Kodak SV5035. Converter 14 causes one slide at a time to be deposited from stack loader 10 into the converter. A light source within converter 14 emits light which is transmitted through the slide onto an area array of charged coupled devices (CCDs), thereby converting the photographic image on the slide into a video image signal. A Kodak Infrared (IR) Remote Control Receiver 32 is mounted on converter 14 and receives IR signals which control operation of the converter.

Controller 18 includes an (IR) transmitter 28 for transmitting IR command signals 30 to controller 14. The IR command signals mimic the signals emitted from a Kodak Infrared (IR) Remote Control Transmitter. Such a Remote Control Transmitter has forward, reverse and two focus buttons. IR transmitter 28 primarily is used to emit the forward IR signal to receiver 32.

Controller 18 is also connected to a standard RS-232 communications port (com port) 35 on a computer 36, preferably an IBM 386 compatible computer or better, by a communications link 38. Converter 14 is connected to a frame grabber board 39 in computer 36 by a video cable 20. Frame grabber board 39 is available from Video Associates Labs under the name of "Video Vue". Computer 36 is connected to a hardcopy output device such as a thermal, xerographic or silver-halide digital printer 44 used to produce index print 16.

The operation of the system shown in Fig. 1 will now be explained. A liquid crystal display (LCD) 48 on controller prompts the operator to load the slides and press a start button 50 on controller 18. After start button 50 has been pressed, controller 18 prompts the user to enter the number of slides via a keyboard 53 and press an "E" button on the keyboard. If an incorrect number of slides is entered, the operator can press a "C" button on the keyboard to clear the incorrect entry.

After the operator has entered the correct number of slides and pressed the "E" button, controller 18 then instructs converter 14, via IR link 30, to load the first slide into the converter. Controller 18 now instructs the computer to cause frame grabber 39 to grab a video signal for the loaded slide via video cable 20. Frame grabber 39 then digitizes the video signal for the slide and stores the digitized signal on the computer's random access memory (RAM).

Computer 36 now applies the digitized video signal to one or more image analysis algorithms, known to those skilled in the art, to determine whether or not the image meets a predetermined minimum quality standard. One such algorithm is an Automatic Sharpness Detection algorithm used in the Agfa MSP Printer to determine if an image is out of focus. If the image is not focused, controller 14 is instructed to emit an IR focus signal to refocus converter 14. The above process is repeated until an in-focus digital image of the slide is obtained.

Once an in-focus image of the slide is obtained, the image is stored on a floppy disk or hard disk within computer 36. The image is stored on the disk with a file name which corresponds to its relative location in the stack loader. If an in-focus image is not found after a predetermined number of tries, a prestored image, denoting the failure, is inserted onto the disk. The above-process is repeated until digital images of all the slides have been captured on computer 36.

Computer 36 combines the individual images on the disk into an index print format. The combined images are then enhanced for such characteristics as sharpness and color balance. Finally, the combined, enhanced images are output from computer 36 along with the location information for each image to output device 44 to produce index print 16.

In the foregoing embodiment, a separate controller 18 is used in addition to computer 36 for at least the following reasons. First, computer 36 does not have an IR transmitter and, therefore, cannot communicate directly with converter 14. Second, such a controller has a minimum number of buttons and is much easier to operate than a standard computer keyboard.

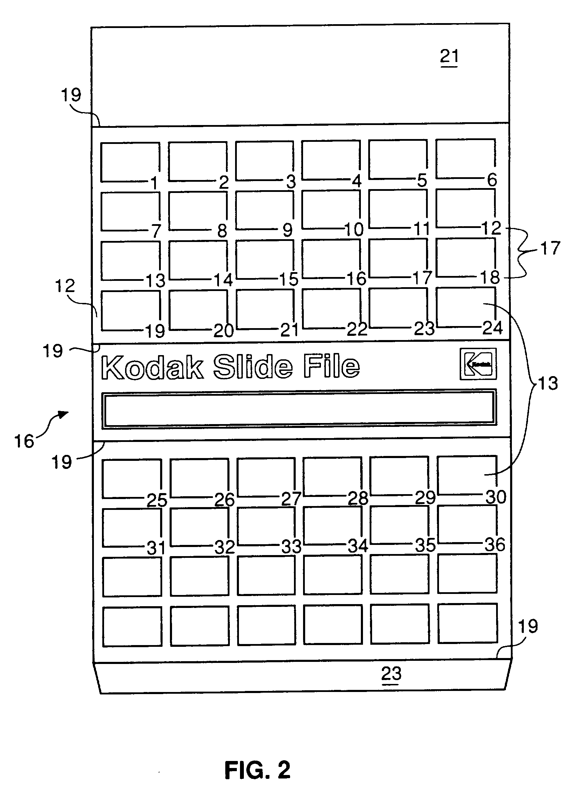

Turning now to Fig. 2, index print 16 will be described in more detail. Index print 16 includes a recording sheet 12 on which are located a plurality of positive images or imagettes 13. Each imagette represents an image stored on a photographic slide. Below each imagette is located a number 17 for indicating substantially where the corresponding slide was located in the stack loader. The recording sheet is preferably prescored at locations 19 to facilitate folding of the index print. The recording sheet includes sections 21 and 23 which are joined together to form the index print into a rectangular loop.

Referring to Fig. 3, the steps of using the index print to secure slides within a container will be described. In step 25, index print 16 is obtained from the printer and positioned to be folded. At steps 27 and 29, the index print is folded along score lines 19. At a step 31, sections 21 and 23 are secured together using tape or adhesive to form the index print into a open-ended box. If recording sheet 12 is photographic paper, typically backcoated with polypropylene, sections 21 and 23 can be heat-sealed together using pressure and heat. For example, a clamp heated to 475 degrees F and applied for about four seconds will seal photographic paper together. The elimination of tape or adhesive lessens the risk to image stability and simplifies the assembly process.

At a step 33, photographic slides 37 from the stack loader are placed in a container 41 which includes a cover 43. The cover is closed in a step 45. Finally, in step 47, the index print from step 31 is slid over container 41 in the direction of arrow 49 to secure the slides within the container by maintaining door 43 in a closed position. The imagettes on the index print also indicate the content of the slides stored in the container. When it is desired to view the slides, the index print is simply slid off of container 41 and door 43 is opened to access the slides.

The invention has been described with reference to a preferred embodiment. However, it will be appreciated that variations and modifications can be effected by a person of ordinary skill in the art without departing from the scope of the invention. For example, other types of image recording medium besides mounted slides, such as video tape, photographic negative film stored in a cartridge, etc., can be utilized with the present invention.

## Claims

1. An index print comprising a support sheet on which are located a plurality of positive images corresponding to a plurality of images on an image recording medium, is characterized in that:
said support sheet has means for preventing the image recording medium from being removed from a storage container used to store the image recording medium.

2. The index print of claim 1, wherein said preventing means includes means for securing a first portion of said support sheet to a second portion of said support sheet to form said support sheet into a loop, said positive images being located on an outer surface of said looped support sheet so as to be viewable, said looped support sheet being placeable about said container to maintain said container in a closed position, thereby securing said image recording medium within said container.

3. An article of manufacture comprised of an image recording medium on which is recorded a plurality of images, a container in which the image recording medium can be stored, and an index print including a support sheet on which is located a plurality of positive images corresponding to said plurality of images recorded on the image recording medium, the index print being supported by the container such that said positive images are viewable by a person observing the container, is characterized by:
means for enabling said index print to secure said image recording medium within said container.

4. The article of manufacture of claim 3, wherein said enabling means includes means for securing a first portion of said support sheet to a second portion of said support sheet to form said support sheet into a loop, said positive images being located on an outer surface of said looped support sheet so as to be viewable, said looped support sheet being placeable about said container to maintain said container in a closed position, thereby securing said image recording medium within said container.

5. An index print comprising a support sheet on which are located a plurality of positive images corresponding to a plurality of images on an image recording medium, is characterized in that:
said index print is configured to surround a container holding the image recording medium to prevent removal of the image recording medium from the container, and is separable from the container to permit removal of the image recording medium from the container; and said positive images are located on the index print to be visible when the index print surrounds the container.
